# EUROPÄISCHE PATENTSCHRIFT

(11) **EP 1 352 804 B1**
(45) Veröffentlichungstag und Bekanntmachung des Hinweises auf die Patenterteilung: **01.12.2004**
(21) Anmeldenummer: 03013476.1
(22) Anmeldetag: 04.02.2000
(51) Int. Cl.: B62D 1/06

(54) **Heizbares Holzlenkrad**
Heatable wooden steering wheel
Volant en bois avec moyens de chauffage

(30) Priorität: 05.02.1999 DE 29902044 U
(43) Veröffentlichungstag der Anmeldung: 15.10.2003
(62) Teilanmeldung aus: 00102117.9
(73) Patentinhaber: TRW Automotive Safety Systems GmbH, 63743 Aschaffenburg (DE)
(72) Erfinder: Kreuzer, Martin, 63839 Kleinwallstadt (DE); Lehmann, Michael, 63739 Aschaffenburg (DE)
(74) Vertreter: Degwert, Hartmut, Dipl.-Phys.

(56) Entgegenhaltungen:
- EP-A- 0 985 590
- US-A- 4 631 976
- US-A- 5 072 093
- US-A- 5 840 144

## Beschreibung

Die Erfindung betrifft ein Lenkrad mit Lenkradkranz, auf dem Lenkradkranz angeordnete elektrische Heizdrähte sowie eine die Heizdrähte abdeckende Lenkradumhüllung. Ein gattungsgemäßes Lenkrad ist z.B. aus Dokument US 5 072 093 A bekannt.

Im Rahmen der Bemühungen zur Verbesserung des Komforts für Kraftfahrzeugbenutzer werden u. a. heizbare Lenkräder angeboten, um den wichtigsten Griffbereich des Lenkrades, d. h. den Lenkradkranz möglichst schnell auf eine haptisch angenehme Temperatur bringen zu können. Möglichst schnell heißt dabei, schneller als es mit den üblichen Heizeinrichtungen für den Innenraum von Kraftfahrzeugen möglich ist. Die Heizdrähte können über den Zündschalter des Kraftfahrzeuges oder auch vorprogrammiert mit dem elektrischen Versorgungsnetz des Kraftfahrzeuges verbunden werden, wobei ihre Heizleistung in an sich bekannter Weise über Temperatursensoren überwacht und geregelt wird.

Die Lenkradumhüllung besteht bei derart heizbaren Lenkrädern vielfach aus Lederabschnitten, die über die Heizdrähte um den Lenkradkranz herumgelegt und randseitig miteinander vernäht werden. Man kann auch mit Heizdrähten versehene Lederstreifen auf dem Lenkradkranz anbringen und randseitig miteinander vernähen. Die Lederumhüllung hat dabei den Zweck, die Heizdrähte optisch zu kaschieren, die Hände des Kraftfahrzeugbenutzers vor einem unmittelbaren Kontakt mit den auf 60 bis 70° C aufgewärmten Heizdrähten zu schützen und die von den Heizdrähten ausgehende Wärme auf größere Flächenbereiche zu verteilten. Es versteht sich von selbst, daß zwischen den letztgenannten Funktionen und der zugrundeliegenden Aufgabe möglichst rasch ein angenehm temperiertes Lenkrad zur Verfügung zu stellen, ein Widerspruch besteht, für den es keine optimale Lösung sondern nur eine auf den jeweiligen Anwendungsfall abgestimmte Kompromißlösung geben kann.

Bei Fahrzeugen der Oberklasse, für die in zunehmendem Maß sog. Holzlenkräder angeboten werden, fehlt es bisher an einer akzeptablen Kompromißlösung für die Anordnung von Heizdrähten. Bei Lenkrädern, bei denen das metallische Lenkradskelett im Kranzbereich eine Ummantelung aus massiven Holzteilen aufweist, ist die Anordnung von Heizdrähten nicht möglich. Unter "Holzlenkrädern" versteht man aber auch Ausführungsformen, bei denen das Lenkradskelett im Kranzbereich mit Halbschalen aus Laminatholz ummantelt ist, auf die außenseitig eine Schicht aus Furnierholz aufgebracht ist. Aus herstellungstechnichen Gründen müssen derartige Halbschalen zusammen mit dem außen aufgebrachten Furnierholz eine Wandstärke von mindestens 3 mm aufweisen, was wegen der schlechten Wärmeleitfähigkeit des Holzes für die angestrebte rasche Erwärmung des Lenkradkranzes zuviel ist. Bei unterhalb einer wenigstens 3 mm dicken Holzschicht angebrachten Heizdrähten kann die Außenschicht des Lenkradkranzes kaum schneller auf die gewünschte Temperatur gebracht werden, als es über die üblichen Heizeinrichtungen für den Fahrzeuginnenraum möglich ist. "Heizbare Holzlenkräder" sind aus diesen Gründen bisher nicht entwickelt und angeboten worden.

Der Erfindung liegt die Aufgabe zugrunde, die vorgenannten Schwierigkeiten zu überwinden und ein "heizbares Holzlenkrad" vorzuschlagen, bei dem die Oberfläche des Lenkradkranzes ähnlich schnell wie bei lederummantelten Lenkradkränzen auf eine haptisch angenehme Temperatur gebracht werden kann.

Zur Lösung dieser Aufgabe wird ein Lenkrad nach Anspruch 1 vorgeschlagen, bei dem die Lenkradumhüllung aus einer gut wärmeleitenden Tragschicht und einer außenseitig auf der Tragschicht liegenden Schicht aus Furnierholz besteht.

Bisher ist man davon ausgegangen, daß die Anordnung von Furnierholz im Bereich des Lenkradkranzes eine Tragschicht aus Holz erfordert, weil anders keine ausreichende Haftfestigkeit zwischen der Tragschicht und dem außen aufgebrachten Furnierholz erreicht werden konnte. Es hat sich jedoch herausgestellt, daß man Furnierholz auch mit Tragschichten zuverlässig verbinden kann, die aus gut wärmeleitendem Material bestehen und die bei einer für den Wärmedurchgang wünschenswerten geringen Dicke eine ausreichende mechanische Festigkeit aufweisen.

Gemäß der Erfindung besteht die Tragschicht vorzugsweise aus glasfaserverstärktem Kunststoff, in den gut wärmeleitende Materialien wie Molybdänsulfid und Ruß eingelagert sind.

Weitere Einzelheiten der Erfindung werden in den Zeichnungen näher erläutert. In den Zeichnungen zeigen:
Figur 1 einen Querschnitt durch einen Lenkradkranz nach einer ersten Ausführungsform;
Figur 2 einen Querschnitt durch einen Lenkradkranz nach einer zweiten Ausführungsform; und

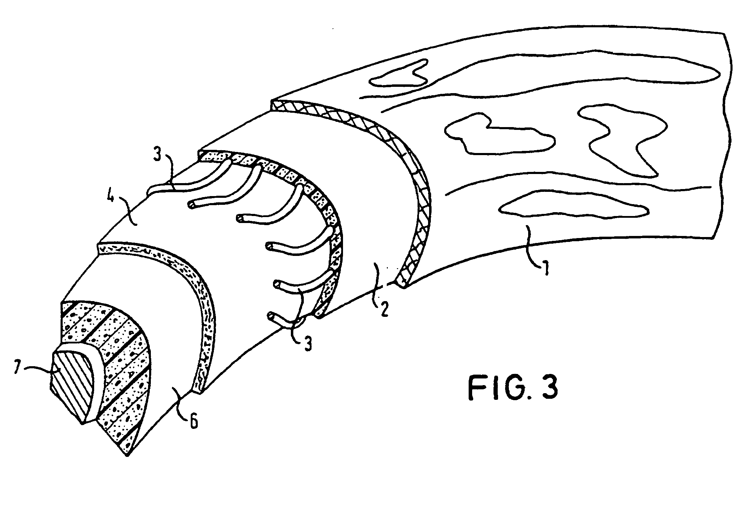

Figur 3 perspektivisch den Aufbau des Lenkrades.

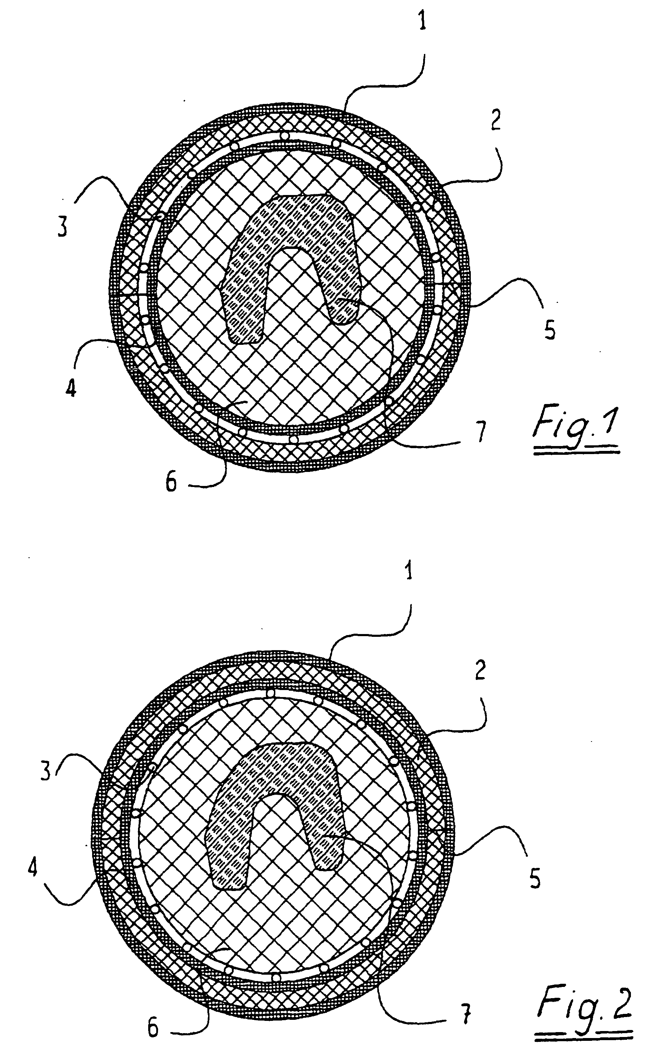

In der schematischen und hinsichtlich der Wanddicke nicht maßstäblichen Schnittdarstellung gemäß Figur 1 besteht der Lenkradkranz aus einem metallischen Lenkradskelett 7, das in bekannter Weise mit einem Schaum-Kunststoff, vorzugsweise aus Polyurethan oder aus expandierbarem Polypropylen umkleidet ist. Auf diesem Basis-Lenkradkranz 6, 7 ist eine Vliesschicht 4 angeordnet, die der Fixierung von elektrischen Heizdrähten 3 dient. Auf die Heizdrähte 3 folgt nach außen anschließend die Tragschicht 2 aus glasfaserverstärktem Kunststoff und schließlich eine mit 1 bezeichnete äußerste Schicht aus Furnierholz. Im dargestellten Ausführungsbeispiel besteht die Umhüllung für den Lenkradkranz 6, 7 einschließlich der Heizdrähte 3 und der Vliesschicht 4 aus vorgefertigten Halbschalen, die längs der Fügeflächen 5 miteinander verklebt sind.

Für die Ausführungsform gemäß Figur 2 sind die gleichen Bezugsziffern verwendet worden. Diese Ausführungsform unterscheidet sich von derjenigen gemäß Figur 1 dadurch, daß die Heizdrähte 3 direkt auf dem Basis-Lenkradkranz 6, 7 aufgebracht und mittels der Vliesschicht 4 fixiert sind. Die Lenkradumhüllung besteht wiederum aus vorgefertigten Halbschalen, die hier aber nur die Tragschicht 2 sowie die außen liegende Schicht aus Furnierholz 1 umfassen und längs der Fügeflächen 5 miteinander verklebt sind. Die Ausführungsform gemäß Figur 2 hat den Vorteil, daß die Heizdrähte nicht auf zwei Halbschalen verteilt sind und relativ aufwendig mit dem elektrischen Bordnetz verbunden werden müssen, sondern insgesamt direkt auf dem Lenkradkranz 6, 7 angeordnet und einfacher zu verdrahten sind. Allerdings bewirkt die zur Fixierung der Heizdrähte 3 außen angebrachte Vliesschicht 4 einen zusätzlichen Wärmeleitwiderstand.

Versuche haben ergeben, daß mit dem erfindungsgemäßen Aufbau der Lenkradummantelung Aufheizzeiten erreicht werden können, die mit denen der lederummantelten heizbaren Lenkrädern vergleichbar sind, weil die Wärmeleitfähigkeit der erfindungsgemäßen Tragschicht gegenüber den bisher verwendeten aus Holz wesentlich besser ist. Jedenfalls kann man durch geeignete Materialauswahl und Bemessung der Dicke der Tragschichten für den Lenkradkranz Aufheizzeiten erreichen, die wesentlich niedriger liegen, als wenn das Lenkrad über die Heizeinrichtungen für den Innenraum des Kraftfahrzeugs aufgeheizt werden müßte.

Für die Tragschicht 2 sind folgende Kunststoffe geeignet: ABS (Acrylnitrid-Butadien-Styrol-Copolymere), Polycarbonat, Polyamid, jeweils vorzugsweise durch Fasern wie Glasfasern verstärkt. Ferner geeignet sind mit Melamin-, Epoxi- oder Polyesterharz getränkte Glasfasern. Auch ein Laminat aus Glasfaserschichten und Holzschichten ist geeignet.

Zur Verbesserung der Wärmeleitung ist in das Material der Tragschicht 2 vorzugsweise ein Füllstoff wie Molybdänsulfid, Kohlenstoff (Ruß) oder Metallpartikel beziehungsweise Metallfasern eingelagert.

Die Vliesschicht 4 besteht bei den bevorzugten Ausführungsformen aus Polyester, Polyamid, Polypropylen oder Sisal-Fasern.

Die Heizdrähte 3 werden vorzugsweise aus Legierungen wie CuNi oder CrNi hergestellt.

## Patentansprüche

1. Lenkrad mit einem Lenkradkranz (6, 7), an dem Lenkradkranz (6, 7) angeordneten elektrischen Heizdrähten (3) sowie mit einer die Heizdrähte (3) abdeckenden Lenkradumhüllung (1, 2, 4), **dadurch gekennzeichnet**, **daß** die Lenkradumhüllung aus einer wärmeleitenden Tragschicht (2) und einer außenseitig auf der Tragschicht (2) liegenden Schicht aus Furnierholz (1) besteht, daß auf dem Lenkradkranz (6, 7) eine Vliesschicht (4) zur Fixierung der Heizdrähte (3) angeordnet ist und daß die Lenkradumhüllung (1, 2) einschließlich der Heizdrähte (3) und der Vliesschicht (4) aus vorgefertigten Halbschalen besteht, die längs Fügeflächen (5) miteinander verklebt sind.

2. Lenkrad nach Anspruch 1, **dadurch gekennzeichnet**, **daß** die Heizdrähte (3) in eine Vliesschicht (4) eingebettet sind.

3. Lenkrad nach Anspruch 1 oder 2, **dadurch gekennzeichnet**, **daß** die Vliesschicht (4) aus einem der folgenden Materialien besteht: Polyester, Polyamid, Polypropylen, Sisal.

4. Lenkrad nach einem der Ansprüche 1 bis 3, **dadurch gekennzeichnet**, **daß** die Tragschicht (2) aus einem faserverstärkten Kunststoff besteht.

5. Lenkrad nach einem der Ansprüche 1 bis 3, **dadurch gekennzeichnet, daß** die Tragschicht (2) aus einem Kunststoff besteht, der unter den folgenden ausgewählt ist: ABS, Polycarbonat, Polyamid.

6. Lenkrad nach Anspruch 5, **dadurch gekennzeichnet**, **daß** der Kunststoff durch Glasfasern verstärkt ist.

7. Lenkrad nach einem der Ansprüche 1 bis 3, **dadurch gekennzeichnet**, **daß** die Tragschicht (2) aus mit Melamin-, Epoxi- oder Polyesterharz getränkten Glasfasern besteht.

8. Lenkrad nach Anspruch 7, **dadurch gekennzeichnet**, **daß** Glasfasern in Form einer Vliesschicht verwendet sind.

9. Lenkrad nach Anspruch 7, **dadurch gekennzeichnet**, **daß** Glasfasern in Form von Gewebeabschnitten verwendet sind.

10. Lenkrad nach einem der Ansprüche 4 bis 9, **dadurch gekennzeichnet**, **daß** in der Tragschicht (2) Füllstoffe eingelagert sind, die eine erhöhte Wärmeleitung der Tragschicht (2) bewirken.

11. Lenkrad nach Anspruch 10, **dadurch gekennzeichnet**, **daß** die Füllstoffe unter folgenden ausgewählt sind: Molybdänsulfid, Ruß, Metallpartikel, Metallfasern.

12. Lenkrad nach einem der Ansprüche 1 bis 3, **dadurch gekennzeichnet**, **daß** die Tragschicht (2) ein Laminat aus Glasfaserschichten und Holzschichten ist.

## Claims

1. A steering wheel comprising a steering wheel rim (6, 7), electric heating wires (3) arranged on the steering wheel rim (6, 7), and a steering wheel casing (1, 2, 4) covering the heating wires (3), **characterized in that** the steering wheel casing consists of a heat conducting support layer (2) and of a layer of veneer wood (1) externally applied to the support layer (2), that a fleece layer (4) for fixing the heating wires (3) in place is arranged on the steering wheel rim (6, 7), and that the steering wheel casing (1, 2) inclusive of the heating wires (3) and the fleece layer (4) consists of prefabricated half shells which are bonded to each other along joint surfaces (5).

2. The steering wheel according to Claim 1, **characterized in that** the heating wires (3) are embedded in a fleece layer (4).

3. The steering wheel according to Claim 1 or 2, **characterized in that** the fleece layer (4) is made of one of the following materials: polyester, polyamide, polypropylene, sisal.

4. The steering wheel according to any of Claims 1 to 3, **characterized in that** the support layer (2) consists of a fiber-reinforced plastic.

5. The steering wheel according to any of Claims 1 to 3, **characterized in that** the support layer (2) consists of a plastic selected from the following: ABS, polycarbonate, polyamide.

6. The steering wheel according to Claim 5, **characterized in that** the plastic is reinforced by glass fibers.

7. The steering wheel according to any of Claims 1 to 3, **characterized in that** the support layer (2) consists of glass fibers impregnated with melamine resin, epoxy resin or polyester resin.

8. The steering wheel according to Claim 7, **characterized in that** glass fibers are used in the form of a fleece layer.

9. The steering wheel according to Claim 7, **characterized in that** glass fibers are used in the form of fabric sections.

10. The steering wheel according to any of Claims 4 to 9, **characterized in that** the support layer (2) has filling materials incorporated therein that cause an increase in the heat conduction of the support layer (2).

11. The steering wheel according to Claim 10, **characterized in that** the filling materials are selected from the following: molybdenum sulfide, carbon black, metal particles, metal fibers.

12. The steering wheel according to any of Claims 1 to 3, **characterized in that** the support layer (2) is a laminate of glass fiber layers and wood layers.

## Revendications

1. Volant de direction comportant une couronne de volant (6, 7), des fils de chauffage (3) électriques agencés sur la couronne de volant (6, 7), ainsi qu'une enveloppe de volant (1, 2) recouvrant les fils de chauffage (3), **caractérisé en ce que** l'enveloppe de volant est constituée par une couche portante (2) thermoconductrice et par une couche de bois de placage (1) située à l'extérieur sur la couche portante (2), **en ce qu'**une couche de non-tissé (4) est agencée sur la couronne de volant (6, 7) pour fixer les fils de chauffage (3), et **en ce que** l'enveloppe de volant (1, 2) y compris les fils de chauffage (3) et la couche de non-tissé (4) est constituée par des demi-coques préfabriquées qui sont collées l'une à l'autre le long de surfaces d'assemblage (5).

2. Volant de direction selon la revendication 1, **caractérisé en ce que** les fils de chauffage (3) sont intégrés dans une couche de non-tissé (4).

3. Volant de direction selon la revendication 1 ou 2, **caractérisé en ce que** la couche de non-tissé (4) est en un des matériaux suivants : polyester, polyamide, polypropylène, sisal.

4. Volant de direction selon l'une des revendications 1 à 3, **caractérisé en ce que** la couche portante (2) est en une matière plastique renforcée par des fibres.

5. Volant de direction selon l'une des revendications 1 à 3, **caractérisé en ce que** la couche portante (2) est en une matière plastique qui est choisie parmi les matières plastiques suivantes : ABS, polycarbonate, polyamide.

6. Volant de direction selon la revendication 5, **caractérisé en ce que** la matière plastique est renforcée par des fibres de verre.

7. Volant de direction selon l'une des revendications 1 à 3, **caractérisé en ce que** la couche portante (2) est constituée par des fibres de verre imprégnées de résine de mélamine, d'epoxy ou de polyester.

8. Volant de direction selon la revendication 7, **caractérisé en ce que** les fibres de verre sont utilisées également sous forme d'une couche de non-tissé.

9. Volant de direction selon la revendication 7, **caractérisé en ce que** les fibres de verre sont utilisées sous forme de portions de tissu.

10. Volant de direction selon l'une des revendications 4 à 9, **caractérisé en ce que** dans la couche portante (2) sont insérées des matières de remplissage ayant pour effet une augmentation de la conduction thermique de la couche portante (29).

11. Volant de direction selon la revendication 10, **caractérisé en ce que** les matières de remplissage sont choisies parmi les matières suivantes : sulfure de molybdène, noir de carbone, particules métalliques, fibres métalliques.

12. Volant de direction selon l'une des revendications 1 à 3, **caractérisé en ce que** la couche portante (2) est un aggloméré laminé en couches de fibres de verre et en couches de bois.
